# EUROPEAN PATENT SPECIFICATION

(11) **EP 0 822 106 B1**
(45) Date of publication and mention of the grant of the patent: **02.04.2003**
(21) Application number: 97202261.0
(22) Date of filing: 18.07.1997
(51) Int. Cl.: B60G 11/12, B60G 11/46, B60G 7/02

(54) **Spring carrier arm for a vehicle spring system**
Federtragarm für ein Fahrzeugfedersystem
Bras porte-ressort pour un système à ressort de vehicule

(30) Priority: 19.07.1996 NL 1003649
(43) Date of publication of application: 04.02.1998
(73) Proprietor: WEWELER NEDERLAND B.V., 7300 AC Apeldoorn (NL)
(72) Inventor: Aalderink, Derk Geert, 7245 NV Laren (NL); Zantinge, Johan Michiel, 6991 HK Rheden (NL)
(74) Representative: de Bruijn, Leendert C.

(56) References cited:
- EP-A- 0 325 002
- EP-A- 0 352 541
- WO-A-94/20320
- GB-A- 2 257 670
- US-A- 2 901 240

## Description

The invention is related to a spring carrier arm for a spring system for a vehicle, comprising a plate structure formed into a U-shape having two plate halves, which are fastened together by means of bent-over flanges, which plate halves can be fastened at their top edges to the vehicle chassis and at a distance from their top edges define two parallel ears in which there are situated pivot points for a supporting arm or spring which can be held between the ears, at least one of the plate halves comprising a side-plate part which is bent over from the relevant ear at a slight angle to the other plate half.

Such a spring carrier arm, which represents the closest prior art, is known from GB-A-2257670. Said prior art spring carrier arm has an intermediate wall interconnecting the plate halves, and is formed from a flat sheet into a U-shape like component.

A spring carrier arm of this kind is generally used in, for example, pneumatic spring systems or mechanical spring systems for lorries, trailers and the like. Two spring carrier arms per axle are welded to the vehicle chassis, from each of which spring carrier arms a supporting arm or spring is suspended. The axle is fastened to the supporting arms. The supporting arms or the axle are supported with respect to the chassis by means of air bellows which provide the spring action.

Other spring carrier arms comprise sheet steel halves on which flanges are formed by bending, which flanges are then welded together. However, these welded spring carrier arms are not available with a shape which becomes narrower towards the top. However, a narrowing shape of this kind is frequently desirable in the context of fastening the spring carrier arm to the chassis bars of the vehicle. However, the underside of the spring carrier arm has to remain sufficiently wide to provide space for the supporting arm.

Known spring carrier arms similar to GB-A-2 257 670 for example are obtained from a single plate which is bent in a U-shape so as to form two plate halves which are connected by a web. An upwardly narrowing design of this known spring carrier arm is indeed known. The upper part of the plate halves is bent over towards one another beneath a die, as a result of which the web may crease on the top side and bulge out forwards.

Another spring carrier arm principally built from a single plate is disclosed in WO-A-94 20320.

The object of the invention is to provide a spring carrier arm which has an upwardly narrowing shape without, however, in the process having to accept parts which bulge out.

This object is achieved by means of a spring carrier arm for a spring system for a vehicle, comprising a plate structure formed into a U-shape having two plate halves, which are fastened together by means of bent-over flanges, which plate halves can be fastened at their top edges to the vehicle chassis and at a distance from their top edges define two parallel ears in which there are situated pivot points for a supporting arm or spring which can be held between the ears, at least one of the plate halves comprising a side-plate part which is bent over from the relevant ear at a slight angle to the other plate half, each flange next to each bent-over side plate part having an edge which runs approximately parallel to the side plate part, said flange being of a height which is such that creasing of the flange owing to the bending in the plate half is at least virtually absent.

According to an alternative prior art embodiment, the spring carrier arm for a spring system for a vehicle comprises a plate structure formed into a U-shape having two plate halves, which are integral with an intermediate flange connecting said plate halves, which plate halves can be fastened at their top edges to the vehicle chassis and at a distance from their top edges define two parallel ears in which there are situated pivot points for a supporting arm or spring which can be held between the ears, said plate halves comprising a side-plate part which is bent over from the relevant ear at a slight angle to the other plate half.

According to the invention, the intermediate flange next to each bent-over side plate part has an opening defined by the edges which run approximately parallel to the side plate part, said flange being of a height which is such that creasing of the flange owing to the bending in the plate half is at least virtually absent.

The spring carrier arm is now completely straight on the front side and can run completely perpendicular to the chassis bar to which it is welded.

The absence of a part which bulges out creates extra space beneath the chassis bar, which can advantageously be used for a casing and the like. At the same time, the spring carrier arm has an upwardly narrowing shape which is desirable in connection with the trend towards vehicles of lighter construction with narrower chassis bars. The spring carrier arm according to the invention itself is also suitable for a lightweight design and may, for example, be made of aluminium.

The height of the relevant flange which is permissable in the context of avoiding creasing during bending can easily be determined experimentally or by calculation. The relevant flange will consequently a height smaller than as was hitherto customary, but this reduction in size does not appear to have any disadvantageous consequences for the strength and rigidity of the overall spring carrier arm, as will be explained below with reference to two possible types of design.

According to a first type of design, at least one pair of fastened-together flanges of the plate halves delimit a cutout over at least part of their height. The presence of a cutout in the flanges does not appear to have any disadvantageous effect on the performance of the spring carrier arm under load.

The size of the flanges is limited in the region of this cutout, as a result of which it is not possible for the said flanges to become creased during the (slight) bending over of the side plates. Moreover, the cutout does not form an unallowable weakening of the flanges, since the thickness thereof and the mutual fastening length which still remains are quite sufficient, due to the fact that in any case the cutout is delimited on the top side by the top flange parts which are fastened together.

According to a first alternative, the cutout may continue on the underside as far as the bottom flange parts which are fastened together. The cutout is then situated essentially exclusively at the level of side plates which adjoin the ears via a bending line.

According to a second embodiment, the cutout on the underside may likewise continue as far as the end of the flanges, the flanges then being connected together by a cross-bar. The two spring carrier arms may moreover be connected together by means of one and the same cross-bar.

In accordance with a usual design of the spring carrier arm, each plate half may possess a flange on each of its two opposite front and rear edges, a pair of these fastened-together flanges of the plate halves extending over the entire height of the plate halves. The other pair of flanges then extends over part of the plate halves from their top edge, leaving free a passage for the supporting arm to be accommodated between the ears.

The height of the spring carrier arm may be selected to be larger if the side plates are bent over at a distance from the ears via in each case a second bending line, which second bending lines are adjoined by two mutually parallel side-plate parts. The spring carrier arm can be welded to the chassis by means of these parallel side-plate parts.

Preferably, the two plate halves are symmetrical. However, it is also possible for the plate halves to be of asymmetric design. Thus, for example, one of the plate halves may be planar and not bent over from its ear, the plate halves delimiting a cutout between them. This cutout is obtained in that the two flanges have a constant height, so that a cutout is formed at the location of the bending in the one plate half.

However, in this connection it is also possible to obtain a continuous spring carrier arm, that is to say a spring carrier arm without a cutout in the flanges, if one of the plate halves is planar and is not bent over from its ear and the flanges of both plate halves are fastened together over their entire height. The flange height of the plate half which is not bent over has to vary here, and may reach a relatively great height. Nevertheless, the greater flange height will not lead to creasing, owing to the absence of a bend in the plate half in question.

The invention will be explained in more detail below with reference to a number of exemplary embodiments depicted in the figures, in which:

Figure 1 shows a side view of part of a pneumatic spring system having a spring carrier arm according to the invention.

Figure 2 shows a front view of the spring carrier arm along II-II from Figure 1.

Figure 3 shows a top view of the spring carrier arm along III-III from Figure 1.

Figure 4 shows a front view of a second embodiment of the spring carrier arm.

Figure 5 shows a front view of a third embodiment of the spring carrier arm according to the invention.

Figure 6 shows a front view of a fourth embodiment.

Figure 7 shows a front view of a fifth embodiment.

Figure 8 shows a front view of a sixth embodiment.

Figure 9 shows a seventh embodiment formed from the blank in accordance with Figure 10.

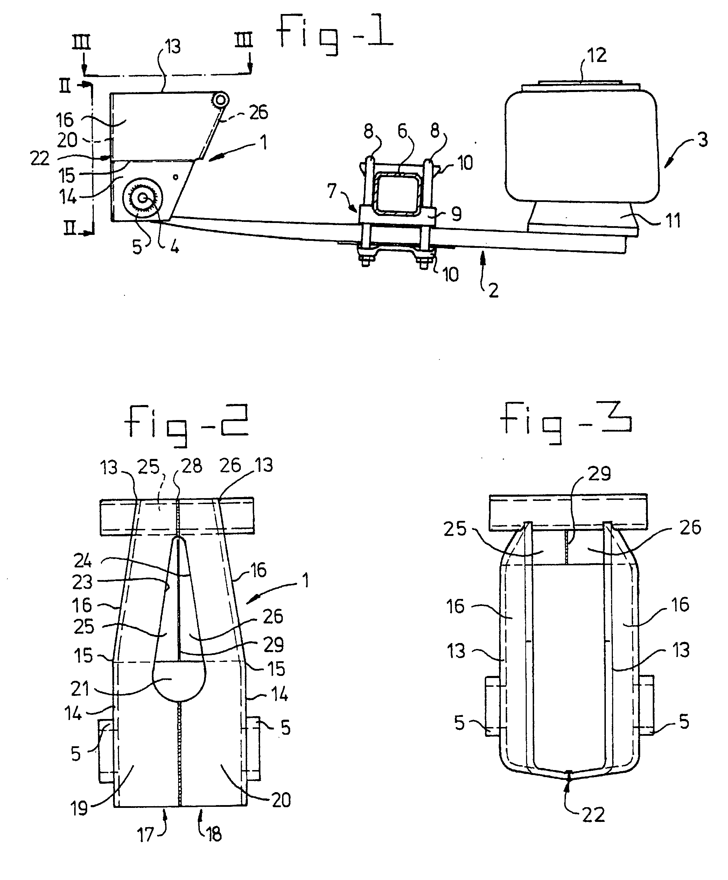

The pneumatic spring system depicted in Figure 1 for a lorry or truck comprises, in a known manner, a spring carrier arm 1, a supporting arm 2 and an air bellows 3. The supporting arm 2 is rotatably suspended in the bearing bushes 5 by means of a pin 4. Furthermore, a hollow axle 6 is fastened to the supporting arm 2 by means of a connecting structure 7 known per se with straps 8, axle guide 9 and strap plates 10. The air bellows, in a known manner, has a mounting part 11, by means of which it is fastened to the supporting arm 2; furthermore, the air bellows 3 has a second mounting part 12, which is to be fastened to the chassis of the vehicle. The top edge 13 of the spring carrier arm 1 is also to be fastened to the vehicle chassis.

Obviously, a further supporting arm (not shown) with spring carrier arm and air bellows is fastened to the axle.

As can clearly be seen in Figure 2, the spring carrier arm 1 has two mutually parallel ears 14, which each adjoin side-plate parts 16 via a bending line 15. The internal space between the two ears 14 is slightly larger than the width of the supporting arm 2, so that the latter can rotate around the pin 4 to be accommodated in the bearing bushes 5.

The side-plate parts 16 run obliquely towards one another, such that the two top edges 13 thereof are spaced apart at the distance which is desired to weld them to a bar of the vehicle chassis.

As is also known, the spring carrier arm 1 comprises a plate structure with two plates halves 17, 18, which are mirror-symmetrical. In addition to the side comprising in each case an ear 14 and side-plate part 16, the plate halves also comprise on their front side a flange denoted overall by 19, 20.

According to the invention, the two flanges 19, 20 delimit a cutout 21 which extends as far as past the bending line 15.

This cutout 21 provides the following advantage. The starting point for producing the plate halves 17, 18 is a flat piece of sheet steel which in a first phase is bent over to form the flanges 18, 19. To obtain the desired tapering form of the spring carrier arm 1, the plates bent over in this way are then bent over again about bending line 15. In the known, one-part spring carrier arms the already bent flanges 19, 20 would in the process become creased, so that the top part thereof bulged out towards the front of the spring carrier arm 1.

Due to the fact that an opening is now left according to the invention between the flanges 19, 20, this creasing does not occur. As a result, the front side 22 remains completely flat.

As can be seen in Figure 2, the edges 23, 24 of the flanges 19, 20 run approximately parallel to the side-plate parts 16.

As is usual, the plate halves 17, 18 are fastened together not only by the front flanges 19, 20 but also by the rear flanges 25, 26. These flanges can also be seen in the top view of Figure 3.

The connecting welds between flanges 19, 20 are denoted by 22 and 28; the connecting weld between the rear flanges 25, 26 is denoted by 29.

In the variant shown in Figure 4, the front flanges 30, 31 which are only fastened together by means of one weld 32 are used. A continuous cutout 33 extends between the two flanges, such that here too creasing is avoided when bending about bending 15. On the underside, the front flanges 30, 31 are welded together by means of a cross-bar 34. This cross-bar continues through to the adjacent, associated spring carrier arm.

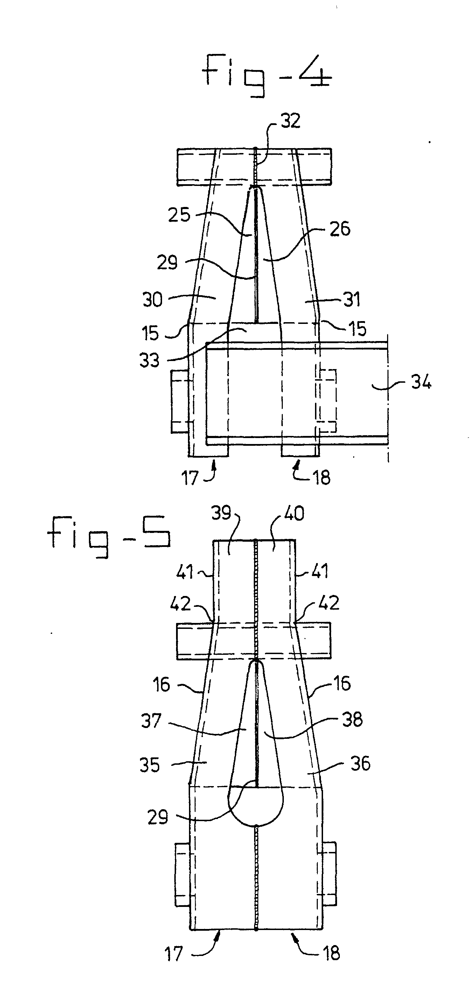

In the variant shown in Figure 5, the front flanges 35, 36 and the rear flanges 37, 38 have additional flange parts 39, 40. The side plates 16 are likewise prolonged, via bendings 42, by additional side-plate parts 41. A spring carrier arm of greater height is thus obtained.

The asymmetric design depicted in Figure 6 has two plate halves 50, 51, which are fastened to a (partially illustrated) chassis bar 52 of a trailer. Plate half 51 is planar and has a flange 53. Plate half 50 is bent over via a bending line 54 and has a flange 55. In the region of the top side, the flanges are now connected to one another via weld 56.

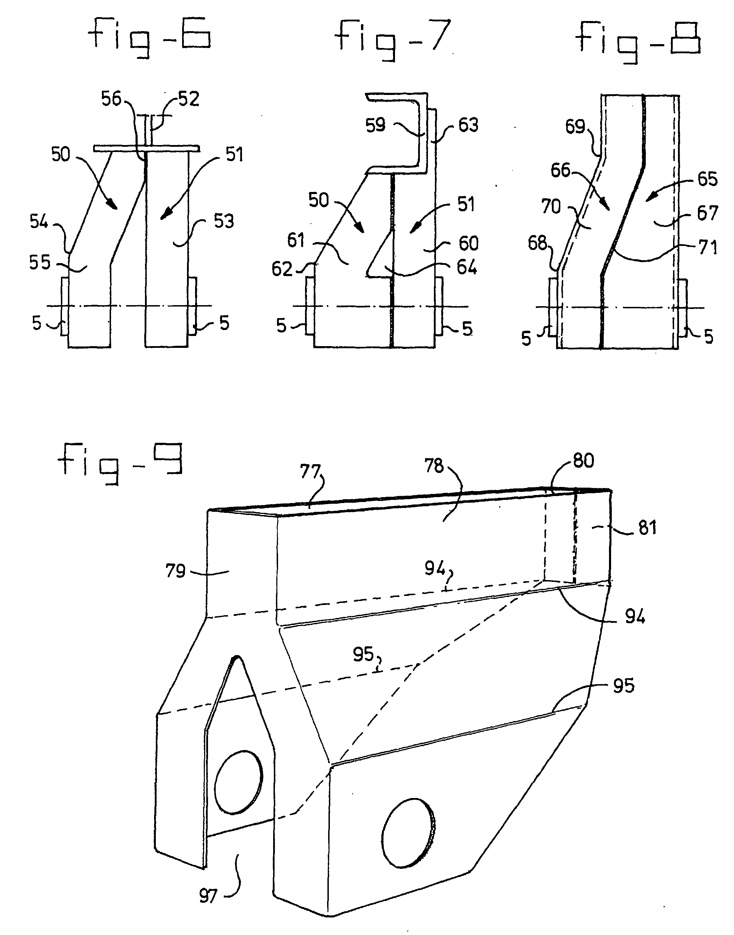

The embodiment in Figure 7 shows an asymmetric spring carrier arm with plate halves 50, 51, which are fastened at the top side to a chassis bar 59 of a lorry.

Plate half 51 is planar and has a flange 60 which is fastened to the flange 61 of the plate half 50 bent over about the bending line 62. Moreover, plate half 51 has an extended side plate 63 which is fastened to the body of the chassis bar 59. The two plate halves delimit a cutout 64.

The embodiment in Figure 8 shows a continuous spring carrier arm with plate halves 65, 66. Plate half 65 is planar and has a bent-over flange 67 which on the underside has a relatively great height.

Plate half 66 is bent over via bending lines 68, 69 and has a flange 70 of a limited, constant height. Owing to this limited, constant height, the flange 70 can be bent over without creasing. In view of the complementary profile of flanges 67, 70, the latter are welded together over their entire height by means of weld 71.

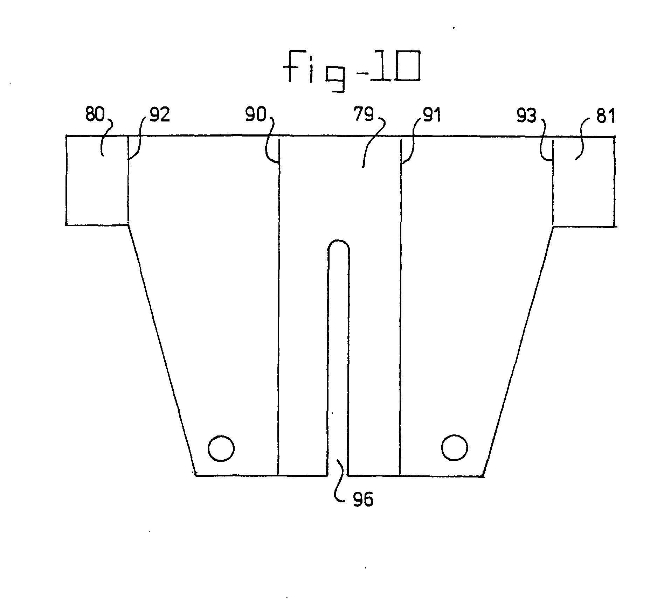

In the variant shown in Figure 9, the spring carrier arm is formed from the blank shown in Figure 10, intermediate flange 79 being formed by bending about the bending lines 90, 91. The flanges 80, 81 are formed by bending about the bending lines 92, 93.

In the bent-over state, the flanges 80, 81 are finally welded together.

Finally, the plate halves 77, 78 are bent over about the bending lines 94, 95, the gap 96 which was originally present in the blank shown in Figure 13 acquiring the shape of the opening 97 depicted in Figure 9.

## Claims

1. Spring carrier arm for a spring system for a vehicle, comprising a plate structure formed into a U-shape having two plate halves (17, 18; 50, 51; 65, 66), which are fastened together by means of bent-over flanges (19, 20; 25, 26; 30, 31; 35 - 38; 53, 55; 60, 61; 67, 70), which plate halves can be fastened at their top edges to the vehicle chassis and at a distance from their top edges (13) define two parallel ears (14) in which there are situated pivot points (5) for a supporting arm (2) or spring which can be held between the ears, at least one of the plate halves (17, 18; 50; 66) comprising a side-plate part (16) which is bent over from the relevant ear (14) at a slight angle to the other plate half, each flange (19, 20; 30, 31; 35 - 38; 53, 55; 60, 61; 67, 70) next to each bent-over side plate part (16) having an edge (23, 24) which runs approximately parallel to the side plate part (16), said flange being of a height which is such that creasing of the flange owing to the bending in the plate half is at least virtually absent.

2. Spring carrier arm according to Claim 1, at least one pair of fastened-together flanges (19, 20; 30, 31; 60, 61) of the plate halves delimit a cutout (21, 33, 64) over at least part of their height.

3. Spring carrier arm according to Claim 2, the cutout continuing on the top side as far as the top flange parts which are fastened together.

4. Spring carrier arm according to Claim 2 or 3, the cutout on the underside continuing as far as the bottom flange parts which are fastened together.

5. Spring carrier arm according to Claim 2, 3 or 4, the cutout being situated at the level of side plates which adjoin the ears via a bending line (15, 54, 62).

6. Spring carrier arm according to Claim 2 or 3, the cutout (33) on the underside continuing as far as the end of the flanges and the flanges being connected together by a cross-bar (34).

7. Spring carrier arm according to one of Claims 2-6, each plate half having a flange on each of its two opposite edges, and a pair of fastened-together flanges (19, 20; 25, 26; 30, 31; 35-38; 53, 55; 60, 61) of the plate halve extending over the entire height of the plate halves.

8. Spring carrier arm according to Claim 7, the edge (23, 24) of each flange which adjoins the cutout (21, 33, 64) being parallel to the bent-over edge between the said flange and the associated plate half.

9. Spring carrier arm according to one of Claims 2-6, a transverse element being welded between the plate halves.

10. Spring carrier arm according to one of the preceding claims, at least one side plate being bent over at a distance from the ears via a second bending line (42).

11. Spring carrier arm according to one of the preceding claims, the two plate halves being symmetrical.

12. Spring carrier arm according to one of Claims 1-10, one of the plate halves (51) being planar and not bent over from its ear and the plate halves delimiting a cutout between them.

13. Spring carrier arm according to Claim 1, one of the plate halves (65) being planar and not bent over from its ear and the flanges of the two plate halves (65, 66) being fastened together over their entire height.

14. Spring carrier arm for a spring system for a vehicle, comprising a plate structure formed into a U-shape having two plate halves (77, 78), which are integral with an intermediate flange (79) connecting said plate halves, which plate halves can be fastened at their top edges to the vehicle chassis and at a distance from their top edges (13) define two parallel ears (14) in which there are situated pivot points (5) for a supporting arm (2) or spring which can be held between the ears, said plate halves (77, 78) comprising a side-plate part which is bent over from the relevant ear (14) at a slight angle to the other plate half, **characterised in that** the intermediate flange (79) next to each bent-over side plate part has an opening (97) defined by the edges which run approximately parallel to the side plate part, said flange being of a height which is such that creasing of the flange owing to the bending in the plate half is at least virtually absent.

## Patentansprüche

1. Federträgerarm für ein Federsystem für ein Fahrzeug, aufweisend:
eine U-förmig ausgebildete Plattenkonstruktion mit zwei Plattenhälften (17, 18; 50, 51; 65, 66), die mittels umgebogener Flansche (19, 20; 25, 26; 30, 31; 35 - 38; 53, 55; 60, 61; 67, 70) aneinander befestigt sind, wobei die Plattenhälften an ihren oberen Enden an dem Fahrzeugchassis befestigt werden können und in einer Distanz von ihren oberen Rändern (13) zwei parallele Laschen (14) bilden, in denen sich Schwenkpunkte (5) für einen Tragarm (2) oder eine Feder befinden, der bzw. die zwischen den Laschen gehalten werden kann, wobei mindestens eine der Plattenhälften (17, 18; 50; 66) ein Seitenplattenteil (16) aufweist, das von der zugehörigen Lasche (14) in einem leichten Winkel zu der anderen Plattenhälfte umgebogen ist,
wobei jeder Flansch (19, 20; 30, 31; 35 - 38; 53, 55; 60, 61; 67, 70) unmittelbar neben jedem umgebogenen Seitenplattenteil (16) einen Rand (23, 24) aufweist, der in etwa parallel zu dem Seitenplattenteil (16) verläuft,
wobei der Flansch eine derartige Höhe aufweist, daß eine Faltverwerfung des Flansches aufgrund der Biegung in der Plattenhälfte zumindest nahezu vollständig unterbleibt.

2. Federträgerarm nach Anspruch 1,
wobei mindestens ein Paar von aneinander befestigten Flanschen (19, 20; 30, 31; 60, 61) der Plattenhälften einen Ausschnitt (21, 33, 64) zumindest über einen Teil ihrer Höhe begrenzt.

3. Federträgerarm nach Anspruch 2,
wobei sich der Ausschnitt an der Oberseite bis zu den oberen Flanschteilen fortsetzt, die aneinander befestigt sind.

4. Federträgerarm nach Anspruch 2 oder 3,
wobei sich der Ausschnitt an der Unterseite bis zu den unteren Flanschteilen fortsetzt, die aneinander befestigt sind.

5. Federträgerarm nach Anspruch 2, 3 oder 4,
wobei sich der Ausschnitt auf der Höhe von Seitenplatten befindet, die über eine Biegelinie (15, 54, 62) an die Laschen angrenzen.

6. Federträgerarm nach Anspruch 2 oder 3,
wobei sich der Ausschnitt (33) an der Unterseite bis zum Ende der Flansche fortsetzt und die Flansche durch eine Querstange (34) aneinander befestigt sind.

7. Federträgerarm nach einem der Ansprüche 2 bis 6,
wobei jede Plattenhälfte einen Flansch an jedem ihrer beiden gegenüberliegenden Ränder aufweist und wobei sich ein Paar von aneinander befestigten Flanschen (19, 20; 25, 26; 30, 31; 35-38; 53, 55; 60, 61) der Plattenhälften über die gesamte Länge der Plattenhälften erstreckt.

8. Federträgerarm nach Anspruch 7,
wobei der an den Ausschnitt (21, 33, 64) angrenzende Rand (23, 24) jedes Flansches parallel zu dem umgebogenen Rand zwischen dem Flansch und der zugehörigen Plattenhälfte ist.

9. Federträgerarm nach einem der Ansprüche 2 bis 6,
wobei ein Querelement zwischen die Plattenhälften geschweißt ist.

10. Federträgerarm nach einem der vorausgehenden Ansprüche,
wobei mindestens eine Seitenplatte in einer Distanz von den Laschen über eine zweite Biegelinie (42) umgebogen ist.

11. Federträgerarm nach einem der vorausgehenden Ansprüche,
wobei die beiden Plattenhälften symmetrisch sind.

12. Federträgerarm nach einem der Ansprüche 1 bis 10,
wobei eine der Plattenhälften (51) planar ist und nicht von ihrer Lasche umgebogen ist und wobei die Plattenhälften zwischen sich einen Ausschnitt begrenzen.

13. Federträgerarm nach Anspruch 1,
wobei eine der Plattenhälften (65) planar ist und nicht von ihrer Lasche umgebogen ist und wobei die Flansche der beiden Plattenhälften (65, 66) über ihre gesamte Höhe aneinander befestigt sind.

14. Federträgerarm für ein Federsystem für ein Fahrzeug, aufweisend:
eine U-förmig ausgebildete Plattenkonstruktion mit zwei Plattenhälften (77, 78) die mit einem die Plattenhälften miteinander verbindenden, zwischengeordneten Flansch (79) einstückig ausgebildet sind, wobei die Plattenhälften an ihren oberen Enden an dem Fahrzeugchassis befestigt werden können und in einer Distanz von ihren oberen Rändern (13) zwei parallele Laschen (14) bilden, in denen sich Schwenkpunkte (5) für einen Tragarm (2) oder eine Feder befinden, der bzw. die zwischen den Laschen gehalten werden kann, wobei die Plattenhälften (77, 78) ein Seitenplattenteil aufweisen, das von der zugehörigen Lasche (14) in einem leichten Winkel zu der anderen Plattenhälfte umgebogen ist,
**dadurch gekennzeichnet, daß** der zwischengeordnete Flansch (79) unmittelbar neben jedem umgebogenen Seitenplattenteil eine Öffnung (97) aufweist, die durch die in etwa parallel zu dem Seitenplattenteil verlaufenden Ränder gebildet ist, wobei der Flansch eine derartige Höhe aufweist, daß eine Faltverwerfung des Flansches aufgrund der Biegung in der Plattenhälfte zumindest nahezu vollständig unterbleibt.

## Revendications

1. Bras de support à ressort pour un système de ressort d'un véhicule, comprenant une structure de plaques en forme de U comprenant deux moitiés de plaque (17, 18 ; 50, 51 ; 65, 66) qui sont connectées l'une à l'autre par le biais de flancs recourbés (19, 20 ; 25, 26 ; 30, 31 ; 35 - 38 ; 53, 55 ; 60, 61 ; 67, 70), lesquelles moitiés de plaque peuvent être fixées au niveau de leurs bords supérieurs au châssis du véhicule et définissent, à une certaine distance de leurs bords supérieurs (13), deux pattes parallèles (14) dans lesquelles se trouvent des points de pivot (5) pour un bras (2) ou un ressort de support qui peut être maintenu entre lesdites pattes, l'une au moins des moitiés de plaque (17, 18 ; 50, 56) comprenant une partie plaque latérale (16) qui est recourbée depuis la patte correspondante (14) selon un angle réduit en direction de l'autre moitié de plaque, chaque flanc (19, 20 ; 30, 31 ; 35 - 38 ; 53, 55 ; 60, 61 ; 67, 70) situé à proximité de chaque partie plaque latérale recourbée (16) comportant un bord (23, 24) qui est approximativement parallèle à ladite partie plaque latérale (16), lequel flanc possède une hauteur qui permet au moins virtuellement d'empêcher tout pliage du flanc du fait de la courbure de la moitié de plaque.

2. Bras de support à ressort, selon la revendication 1, dans lequel au moins deux flancs (19, 20 ; 30, 31 ; 60, 61) connectés l'un à l'autre des moitiés de plaque délimitent une découpe (21, 33, 64) sur une partie au moins de leur hauteur.

3. Bras de support à ressort, selon la revendication 2, dans lequel la découpe sur le côté supérieur va aussi loin que les parties des flancs supérieurs qui sont assemblées l'une à l'autre.

4. Bras de support à ressort, selon la revendication 2 ou 3, dans lequel la découpe sur le dessous va aussi loin que les parties des flancs inférieurs qui sont assemblées l'une à l'autre.

5. Bras de support à ressort, selon la revendication 2, 3 ou 4, dans lequel la découpe se situe au niveau des plaques latérales qui rejoignent les pattes le long d'une ligne de courbure (15, 54, 62).

6. Bras de support à ressort, selon la revendication 2 ou 3, dans lequel la découpe (33) sur le dessous va aussi loin que l'extrémité des flancs, les flancs étant connectés l'un à l'autre par une barre transversale (34).

7. Bras de support à ressort, selon l'une des revendications 2 à 6, dans lequel chaque moitié de plaque comprend un flanc sur chacun de ses deux bords opposés, tandis que deux flancs fixés l'un à l'autre (19, 20 ; 25, 26 ; 30, 31 ; 35 - 38 ; 53, 55 ; 60, 61) des moitiés de plaque s'étendent sur toute la hauteur des moitiés de plaque.

8. Bras de support à ressort, selon la revendication 7, dans lequel le bord (23, 24) de chaque flanc rejoignant la découpe (21, 33, 64) est parallèle au bord recourbé entre ledit flanc et la moitié de plaque associée.

9. Bras de support à ressort, selon l'une des revendications 2 à 6, dans lequel un élément transversal est soudé entre les moitiés de plaque.

10. Bras de support à ressort, selon l'une des revendications précédentes, dans lequel au moins une plaque latérale est recourbée à une certaine distance des pattes le long d'une seconde ligne de courbure (42).

11. Bras de support à ressort, selon l'une des revendications précédentes, dans lequel les deux moitiés de plaque sont symétriques.

12. Bras de support à ressort, selon l'une des revendications 1 à 10, dans lequel l'une des moitiés de plaque (51) est plane et n'est pas recourbée depuis sa patte, les moitiés de plaque délimitant une découpe entre elles.

13. Bras de support à ressort, selon la revendication 1, dans lequel l'une des moitiés de plaque (65) est plane et n'est pas recourbée depuis sa patte, les flancs des deux moitiés de plaque (65, 66) étant connectés l'un à l'autre sur toute leur hauteur.

14. Bras de support à ressort pour le système de ressort d'un véhicule, comprenant une structure de plates en forme de U comprenant deux moitiés de plaque (77, 78) qui font partie intégrante d'un flanc intermédiaire (79) connectant lesdites moitiés de plaque, lesquelles moitiés de plaques peuvent être fixées au niveau de leurs bords supérieurs au châssis du véhicule et définissent, à une certaine distance de leurs bords supérieurs (13) deux pattes parallèles (14) dans lesquelles se trouvent des points de pivot (5) pour un bras (2) ou un ressort de support qui peut être maintenu entre les pattes, lesquelles moitiés de plaque (77, 78) comprennent une partie plaque latérale qui est recourbée depuis la patte correspondante (14) selon un angle réduit en direction de l'autre moitié de plaque, **caractérisé en ce que** le flanc intermédiaire (79) situé à proximité de chaque partie plaque latérale recourbée comprend une ouverture (97) définie par les bords qui sont approximativement parallèles à ladite partie plaque latérale, lequel flanc possède une hauteur qui permet au moins virtuellement d'empêcher tout pliage du flanc du fait de la courbure de la moitié de plaque,
